# EUROPEAN PATENT SPECIFICATION

(11) **EP 1 553 393 B1**
(45) Date of publication and mention of the grant of the patent: **26.08.2009**
(21) Application number: 04380283.4
(22) Date of filing: 30.12.2004
(51) Int. Cl.: G01M 7/08, G01N 3/307

(54) **Machine for applying low velocity impacts to mechanical structures**
Vorrichtung zum Dürchführen von Einschlägen mit niedriger Geschwindigkeit auf mechanische Strukturen
Dispositif pour appliquer des impacts de faible vitesse à des structures mécaniques

(30) Priority: 31.12.2003 ES 200303088
(43) Date of publication of application: 13.07.2005
(73) Proprietor: Airbus España, S.L., 28906 Getafe (Madrid) (ES)
(72) Inventor: Molina Camio, José Ignacio, 28906 Getafe (ES)
(74) Representative: Ungria Lopez, Javier

(56) References cited:
- DE-A1- 10 009 987
- DE-A1- 10 104 192
- US-A- 5 184 499
- PATENT ABSTRACTS OF JAPAN vol. 007, no. 035 (P-175), 10 February 1983 (1983-02-10) & JP 57 187635 A (MITSUBISHI JUKOGYO KK), 18 November 1982 (1982-11-18)

## Description

### OBJECT OF THE INVENTION

As stated in the title, the present invention concerns a machine for applying low velocity impacts to mechanical structures, being a compact and high precision machine, offering a wide range of energies, the impacts being able to be applied from the interior and from the exterior of a complete or specimen structure, from any angle of incidence and measuring the energy delivered and that returned.

Currently, at least in the context of composite primary structures for aircraft, one of the main problems that is always present is the evaluation of "tolerance to damage". Today, owing to the incorporation of new elements/assemblies in composite materials, there is an urgent need to improve the test procedures for these evaluations, and robust and integral solutions are needed for them.

In order to introduce equivalent damages to those occurring in service (primarily during operations on ground) low velocity impacts have to be applied with precision (typically up to 10 m/s between 20 and 150 joules).

### BACKGROUND OF THE INVENTION

The methods currently in use are based on the free fall of a mass from a defined height or in a "Charpy" type pendulum (which also functions under the effect of gravity). These procedures have major limitations, basically in terms of the angle of incidence, accessibility of the applicator device and maximum energy that can be supplied in practice. Also, these tests must avoid the "secondary" impact which usually occurs as a consequence of the elastic rebound, and in the methods mentioned this is prevented with the manual (and agile) intervention of the operator.

Owing to the said restrictions, the normal practice is to apply impacts to structural elements that are isolated or in partially combined assemblies which permit positioning of the applicator device. This involves constructing "in the most representative way possible" the surrounding conditions which the element would have in the complete structure. In short, the procedure is "artificially" complex and expensive and the results are not sufficiently reliable.

Another important point is the lack of data on the ratio of absorbed energy/applied energy.

### DESCRIPTION OF THE INVENTION

In general terms, the machine for applying low velocity impacts to mechanical structures forming the object of the invention transforms the internal energy accumulated in a small. tank of compressed air (hereinafter called the drum) into the kinetic energy of a mass which impacts (hereinafter called the impactor).

The machine that we are concerned with includes three main mechanical blocks:
- The impactor, which has a mass suited to the energy range to apply. For an energy between 20 and 150 joules, the mass is in the range 3 to 5 kg.
- The launcher, which includes the pneumatic cylinder and various auxiliary cylinders. Its mass must be an order of magnitude larger than that of the impactor.
- The base structure, which supports the mechanical blocks mentioned above and houses part of the pneumatic and electrical device of the corresponding circuits, along with more control elements.

Its total mass is an order of magnitude larger than that of the impactor.

The parts of the machine can also be described from a functional point of view in order to have a more complete picture, for which it comprises the following assemblies/systems:
- Pneumatic propulsion system. This supplies and handles the internal energy accumulated in a mass of air to be confined in a drum. It also provides the continuous supply of air to the air cushion suspension system and operates the firing assembly.
   In addition, it charges the two chambers of the residual energy absorber device to the pre-established pressures for the particular impact.
   It includes as a fixed installation a set of electrovalves, air filter, pressure sensors and a drum to be selected from an available range (the one which is best adapted to the firing conditions in order to improve the precision in the energy supply).
- Suspension by air cushion bearings. The launcher includes two identical commercial elements guaranteeing friction-free suspension of the impactor during the relative movement of them both. The selected size permits micrometric lateral movements which do not affect the precision of the velocity measurement system.
- Firing assembly. Its function is to eliminate, as instantaneously as possible, all the connections between the impactor, the launcher and the base, in order to permit movement of the impactor and launcher subjected to the pressure of the drum.
- Piston-valve-spring assembly. This is in charge of maintaining the compression in the pneumatic chamber during the acceleration phase, for discharging the pressure at the end of it and for retaining the impactor after the impact.
- Residual energy absorber. During the application of the impact, the energy supplied in the expansion is distributed between the impactor and the launcher (following the law of quantity of movement), whereby the transmission of perturbations to the base structure is avoided. After the application of the impact and when the rebound velocity has already been measured, the launcher has to be detained (as gently as possible), and to this purpose this device has been included.
- Emergency energy absorber. This device is provided so that it operates only if, due to human error, the structure that is going to receive the impact is positioned outside the range of the machine. The absorber mechanism receives all the kinetic energy of the impactor and it stops it with a small additional displacement.
- Velocity measurement system. This system is based on a laser device which measures short distances with great precision. The laser device samples the distance at fixed intervals of time and in this machine there are at least three guaranteed samples (worst case of maximum velocity). The "useful" measurements can be easily separated from the set of readings gathered and a precise measurement of velocity is obtained by means of a simple algorithm.
- Control system. This is the means for coordinating the entire operation of the machine. It also permits remote handling, which is necessary in the majority of cases in order to keep personnel away from the test area (safety and isolation from perturbations).
   Another advantage of this control system is that it permits a progressive improvement in the quality of the impacts, since it enables a correlation analysis to be performed between the predicted energy and that measured. The historical information of this analysis permits, on the one hand, the prediction algorithm to be refined, and, on the other, degradation data for those elements that are expected to undergo periodical replacement (as in the case of the O-ring seal for the impactor piston, as we shall see later on in relation to the figures).

The mode of storage of the machine that we are concerned with is as follows:

The impactor, the launcher and the base structure are joined by the mechanism of the firing device. The pneumatic circuits are fully discharged.

In order to place the machine in operation, the process is fully coordinated by the control system. The sequence is as follows:
- Connection of the air cushion surface to the corresponding pressure line.
- Initial safety check (available pressure, correct signal in the velocity and pressure channels, ...).
- Input of data (identification of test/impact, energy to apply and angle of incidence).
- Verification that the installed drum and the ballast pieces in the launcher are suitable for the energy to be applied.
- Additional safety check (verification of the distance to the specimen in order to guarantee the correct impact).
- Priming of the impactor (this has to be introduced into the launcher and retained by the firing device, and the control system has to detect this condition).
- Connection of the two chambers of the residual energy absorber to the pressure line, adjusting the pressure of each chamber and isolating the chambers (closing the corresponding electrovalves).
- Connection of the drum to the pressure line, adjusting the pressure with precision and isolating the drum from the line (closing the corresponding electrovalve).
- Requesting for authorisation to carry out the impact. The system is now ready for firing.

After a short wait (approximately 15 seconds), if it has not been authorised, the system does not accept the order and it commences a recycling, again adjusting the pressure in the drum and asking for authorisation once more. This operation prevents any maladjustment of pressure in the drum (and therefore the energy of the impact) due to changes in external temperature.

When the firing is authorised, for a normal impact the sequence is as follows:
- The control system pneumatically activates the firing mechanism, thereby releasing the impactor and the launcher, and both, from the base structure.
- The compressed air confined in the drum is expanded, the impactor and the launcher being repelled along the axis of impact. This constitutes the acceleration phase of the movement.
- When the impactor has travelled a fixed distance in relation to the base, the valve in the tail of the impactor is opened mechanically and the pressure chamber instantaneously discharges into the atmosphere.
- The impactor now moves ballistically as has been explained previously. This phase ends when the impactor reaches the specimen. The residual energy absorber decelerates the launcher until it is detained. During a short interval of the ballistic phase the velocity is measured (which varies very little in this phase).
- Following the impact, the impactor rebounds with the energy not absorbed by the specimen and it also receives the energy returned by the spring (which has been charged). The velocity is also measured during the rebound.
- Immediately after, the control system issues a short report stating the "energy applied" along with the "energy absorbed" by the specimen (both obtained from the velocity measurements).
   When the system is wrongly activated (with the specimen outside the radius of action of the machine), a "false impact" is produced and the first four points of the previous section are applicable. In this case, the impactor reaches the emergency energy absorber, which dissipates the kinetic energy of the impactor in a short additional displacement.

The activation of this device requires it to be primed manually (as explained earlier).

The control system reports on the "false impact" and tells the operator the steps to follow.

The machine is pneumatically operated in "open cycle" (low cost, low weight and compact construction).

High precision has been achieved in the application of energy:
- Very low losses due to friction.
- Provision of a set of ballast pieces, along with a set of drums of different capacity, in order to optimise the precision by means of a suitable selection of them. This optimisation is based on working in the upper region of charge pressures of the drum (close to the bottom of the scale of the pressure sensor, wherein the measurements are more accurate).
   The procedure for velocity measurement has a high precision (laser device).

The structure of the machine also avoids "secondary impacts

In order to facilitate an understanding of the features of the invention and forming an integral part of this descriptive specification, attached is a series of drawings containing figures in which, by way of illustration and not limiting, the following have been represented:

### BRIEF DESCRIPTION OF THE DRAWINGS

Figure 1.- Is a perspective view of the impactor of the machine for applying low velocity impacts to mechanical structures, forming the object of the invention, including the velocity measurement device by laser and part of the base structure.
Figure 2.- Is a perspective view of the launcher which includes the guide fittings in the base structure and the pneumatic cylinder which drives the impactor sliding along its interior.
Figure 3.- Is a perspective view in longitudinal cross-section of the base structure supporting the launcher and the impactor.
Figure 4.- Is a perspective view, with a sectioned quarter, of the firing mechanism for movement of the impactor and the launcher, both subjected to the pneumatic pressure of the drum.
Figure 5.- Is a partial view in perspective of the emergency energy absorber, connected to the base structure and integral with the yoke acting as a buffer for the flange of the impactor.
Figure 6.- Is a partial view in perspective, with a sectioned portion, of the residual energy absorber device, after application of the impact, in order to detain the launcher.

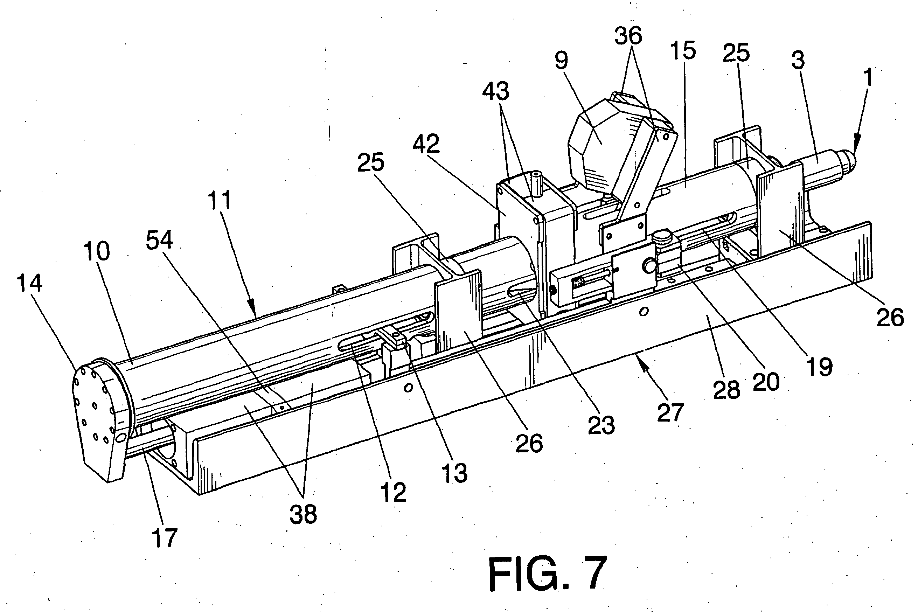

Figure 7.- Is a perspective view of the complete machine with all the devices fitted.

### DESCRIPTION OF THE PREFERRED FORM OF EMBODIMENT

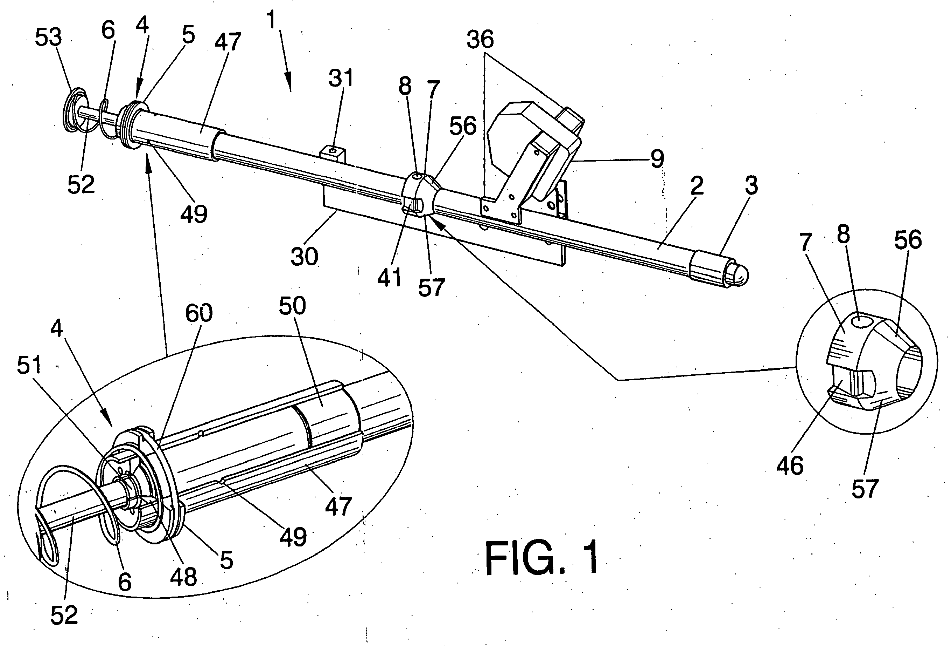

Making reference to the numbering adopted in the figures, we can see how the machine for applying low velocity impacts to mechanical structures, which the invention proposes, includes among its basic components the element which we have been calling the impactor and whose configuration we can see in figure 1, wherein it is referenced in general with number 1.

It includes a highly polished bar 2, owing to the requirements of the air cushion bushings keeping it suspended, which we will be dealing with later on. The bar 2 incorporates the impactor head 3 at its front end, and the piston-valve-spring assembly at the other end. This assembly is referenced in general with number 4; the piston itself is referenced with number 5 and the spring with number 6.

In the central part of the bar 2 of the impactor 1, we can see the special flange, referenced with number 7, which is joined to the bar by means of the stud 8.

Also shown in this figure 1 is the laser head 9, among other component elements.

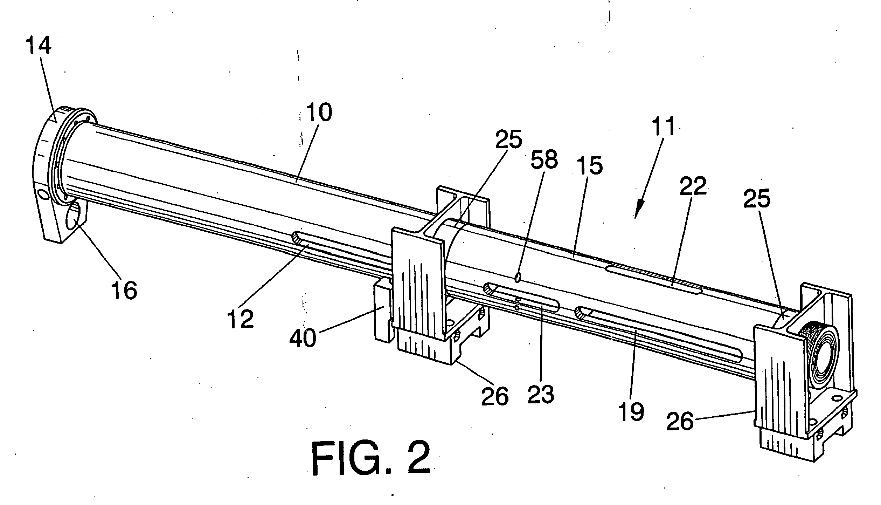

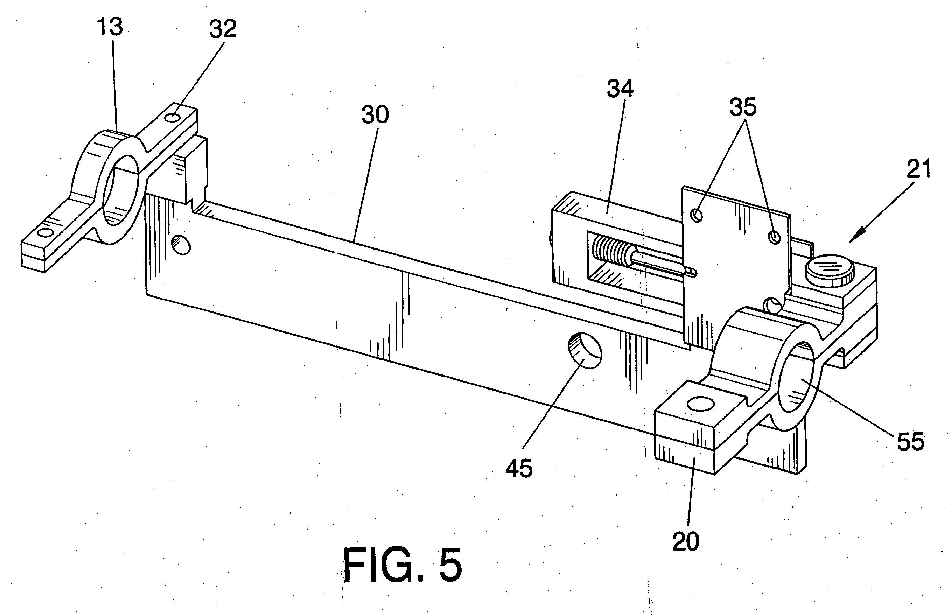

Shown in figure 2 is another of the main mechanical blocks of the machine, which we have been calling the launcher and which includes the sleeve 10 of the pneumatic cylinder which is completed with the piston 5 of the rear part of the impactor 1. The launcher is referenced in general with number 11. The sleeve 10 of the pneumatic cylinder for propulsion of the impactor 1 has two symmetric side windows 12 through which the ends of the valve retainer (referenced with 13 in figure 5) pass, in any position of the travel of the launcher 11. Its rear end remains closed with the cover 14 and its front end is extended in the main tube 15.

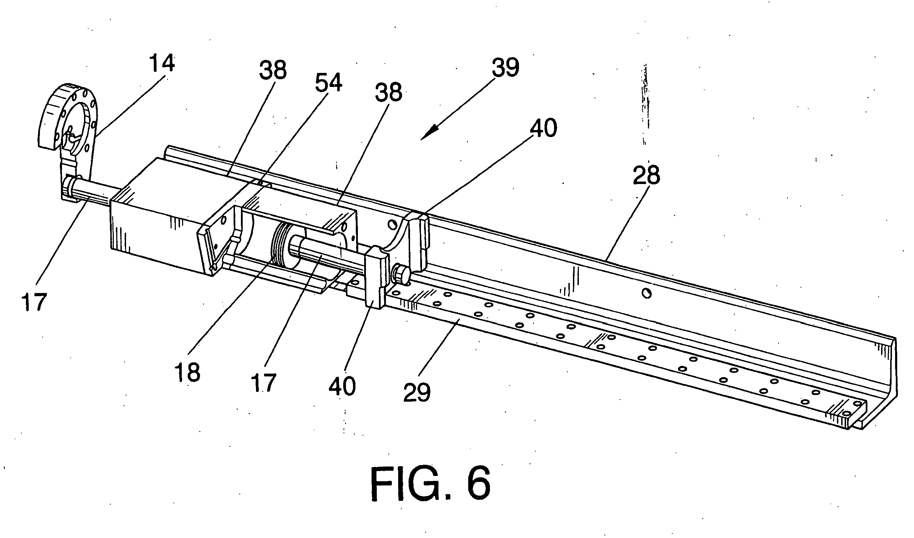

The cover 14 is fixed to the tubular sleeve 10 of the propulsion cylinder, with the interposition of a sealing ring. It includes the pneumatic connection (flexible) to the drum (not represented) as well as the securing point 16 of one of the rods 17 (see figure 6) of the respective piston of the residual energy absorber device, shown in this figure 6. The reference 18 labels one of these pistons.

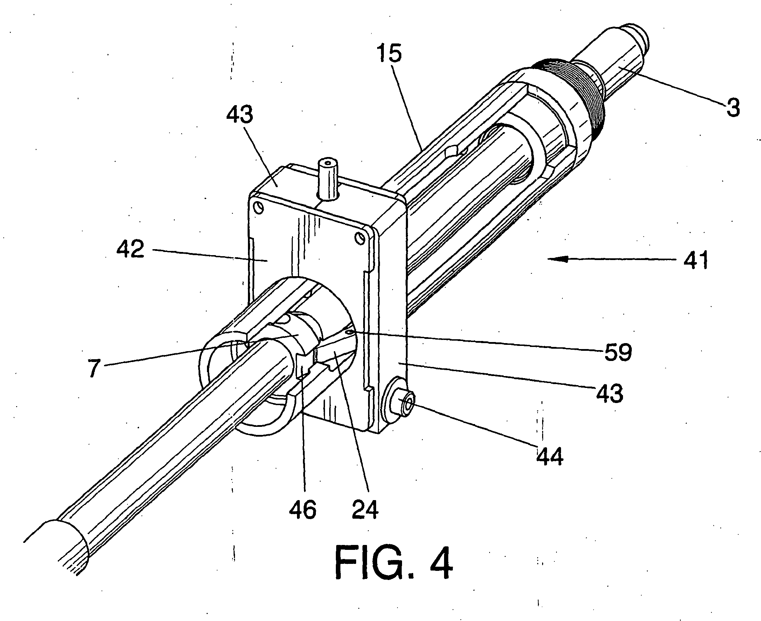

The main tube 15 is the support for the firing assembly which we will be seeing later on in relation to figure 4. It possesses two symmetric side windows 19 for the passage of the retaining yoke 20 (see figure 5) of the emergency energy absorber device, referenced in general with number 21 in this figure 5. It also has another upper window 22 for the passage of the laser beam of the velocity measurement system, of which the laser head 9 of figure 1 forms part. It also includes two side windows 23, aligned with those referenced with 19 which are located further back than the latter, through which they pass, and are linked together the two pivoting levers or catches 24 of the firing assembly, which we will be talking about in relation to figure 4.

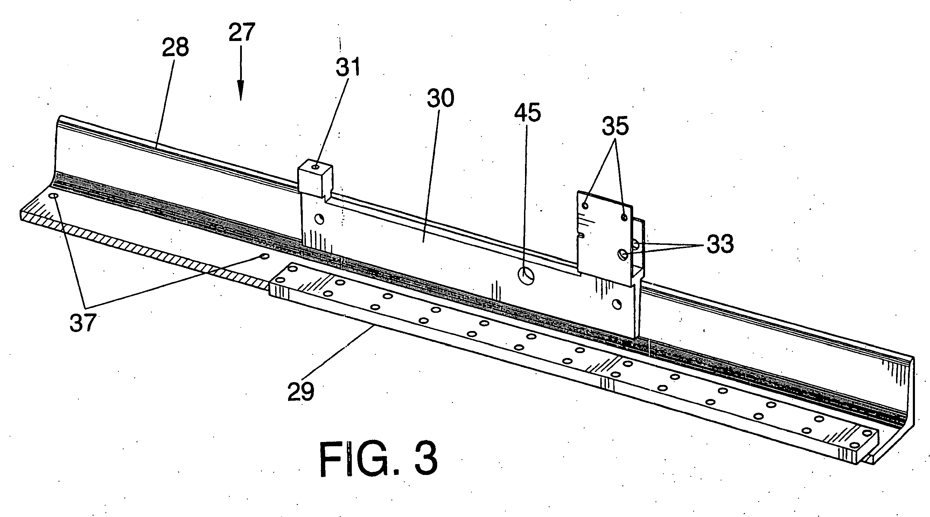

The main tube 15 houses at its ends the air cushion bearings 25, along with the fittings 26 supporting the runners of the linear bearing, linking the launcher 11 to the base structure which we can see in figure 3 and whose features will be commented below.

The base structure is referenced in general with number 27 and consists of the basic piece 28 in a "U" shape (in this figure 3 just one of its longitudinal halves has been represented so that its internal elements can be seen). As with the launcher of figure 2, the equipment platform, the equipment and the ducting and cabling are not represented since they are known in themselves.

The "U" piece 28 is integral with the rail 29 of the linear bearing on which the launcher 11 slides, provided for that purpose with the fittings 26, inside which a bridge-shape can be distinguished.

The "U" piece 28 also includes two special symmetric fittings, referenced with number 30 and which include the securing drill-holes 31 for the valve retainer 13 (see figure 5), by means of the stud 32; also including the securing holes 33 for the absorber module 34 of the emergency energy absorber device 21 (see figure 5); also being provided with some holes 35 for securing of the supports 36 for the laser head 9 (see figure 1). Also joined to the "U" piece 28 of the base structure 27 via the drill-holes 37 made in its core are the cylinders 38 of the residual energy absorber device (see figure 6), about which we will be talking further below, and which is in general referenced with number 39 in this figure 6.

Looking at this figure 6 and also figure 2, we can see how the right rod 17 of the piston 18 of the residual energy absorber device 39 remains secured to the piece 40 integral with the fitting 26 (the one on the left of figure 2). The other rod 17 remains secured to the hole 16 of the cover 14 as we said earlier.

The main tube 15 can optionally include ballast pieces (not represented in the figures) for improving the response of the machine in the upper range of energies.

Represented in figure 4 is the firing assembly referenced in general with number 41. It includes a body 42 fixed to the launcher 11, which incorporates a cylinder-piston for operating the firing mechanism; two actuators 43 in the form of an "L", each of which includes a lug 44 which retains/releases the securing between the launcher 11 and the base structure 27. The lug 44 enters the hole 45 (see figure 5). Each of these actuators 43 presses on the pivoting lever or catch 24 mentioned earlier.

The firing operation is commenced pneumatically and the effect is dual: to withdraw the said lugs 44 and to release the impactor 1 when the two pivoting levers 24, that were retaining it by means of the flange 7 (see figures 1 and 4), are removed. These housings in the flange 7 are referenced with number 46.

In the blow-up detail of figure 1 the structure presented by the piston-valve-spring assembly can be clearly seen, referenced in general with number 4 and which performs the following functions:
- It remains as an integral part of the impactor, moving with it in the acceleration phase, since it is driven by means of the spring 6 and the pressure existing in the impulse cylinder chamber, the bar of the impactor 2 in this zone having a conical tip on which a conical cut made in the left end of the body 47 sits, this conical passage referenced in general with number 48 being closed. The discharge via this conical passage 48 is done by means of the group of drill-holes 49, when the body 47 is retained in its movement by the valve retainer 13. The impactor 1 continues to move inertially (the external forces acting on it are: gravity, the small retention of the spring 6 and the insignificant friction of the friction bushings located at the ends of this body 47, referenced with numbers 50 and 51). The friction bushing 51 is adjusted to the end rod 52 axially threaded to the rear end of the bar 2 of the impactor 1.
   The length of the spring 6 and of the threaded rod 52 with its support head 53 for the spring 6, in the tail of the impactor, permits the complete displacement of this until impacting. Immediately after the impact, a rebound takes place, but the spring 6 guarantees that no "secondary" impact is produced, the rigidity of the spring 6 being that required for this case, even in situations of firing vertically downwards.
   The residual energy absorber 39 of figure 6 includes the two cylindrical bodies 38, previously referred to and which are mounted one on each side of the central body 54 from wherein the chamber of each cylinder 38 (on one side of the respective piston 18) is charged to the proper pressure. The two cylinder bodies 38, together with the central body 54, constitute a block joined to the base structure 27 in the holes 37 thereof (see fig. 3).

As has been stated, the pistons 18 are integrally joined via their rods 17 to the launcher 11 by means of the cover 14 and the piece 40. The pistons 18 are initially centered in their respective cylinders 38, permitting the same displacement in both directions. The movement of the launcher 11 in relation to the base 27 generates a very small reaction force in the first part of the movement which grows sharply when the cavity that is reduced has a size very much less than at the beginning. This type of profile of the pressure is very convenient for not transmitting any perturbation to the base in the first phase and guaranteeing a smooth braking. Also, the angle of the impact, for establishing the particular pre-charge pressure of each chamber, is considered.

Going back to referring to figure 5, which shows the emergency device 21, when the travel of the impactor 1 exceeds the rated limit by a small distance the flange 7 integral with the bar 2 is inserted into the yoke 20, specifically into the tronco-conical seating 55. Via its two ends, the yoke 20 pulls on the respective absorber blocks 34 which, due to being secured to the base 27 (specifically to the two paired fittings 30), transmit to it the energy not absorbed by them. This residual energy is a function of the ratio of the mass of the impactor and the base.

In order to measure the velocity of the impactor 1 by means of the laser device 9, provision has been made for the flange 7 to have a planed surface on its conical part 57. The laser head 9 sees the bar of the impactor all the time during the acceleration phase. Only during the interval provided for the measurement does the plane face 56 of the flange 7 function as a mirror. As we said earlier, the laser device takes at least three guaranteed samples, thereby obtaining a precise measurement of the velocity.

Going back to referring to figure 2, the reference 58 shows a vertical hole which is crossed with the geometric axis of the launcher 11 and which vertically traverses the window 23 for location of the rotating pin 59 (see figure 4) of the pivoting levers or catches 24 which are retained in the housings 46 of the flange 7 of the impactor 1.

In the blow-up detail of figure 1, referenced with number 60 is the O-ring seal of piston 5 arranged in a floating position in order to minimise friction.

## Claims

1. MACHINE FOR APPLYING LOW VELOCITY IMPACTS TO MECHANICAL STRUCTURES, in a wide range of energies from the interior and from the exterior, at any angle of incidence, measuring the energy applied and that absorbed and with a very short operating cycle, **characterised in that** it comprises an impactor element (1) joined to a launcher element (11) and both in turn to a base structure (27) by means of some catches (24) and actuators (43) activated by the control system for the machine, the impactor (1) having the form of a cylindrical bar (2) with a front end (3) for impact, a flange (7) in its central body and a rear end wherein the valve assembly (4) is to be found whose piston (5) is joined to a tubular body (47) which slides in the rear section of the bar (2) of the impactor (1), and whose sleeve (10) of the propulsion cylinder is the rear part of the launcher tube (11), the piston (5) being aided by a spring (6) absorber of the rebound; there existing a residual energy absorber system (39) where both chambers of two pneumatic cylinders (38) are charged to a certain pressure, the impactor (1) being primed by being displaced inside the launcher (11) until it is retained by some pivoting catches (24), with the impact being effected by acting on a firing mechanism (41).

2. MACHINE FOR APPLYING LOW VELOCITY IMPACTS TO MECHANICAL STRUCTURES, according to claim 1, **characterised in that** the launcher element (11) includes the tube or sleeve (10) of the pneumatic cylinder of the propulsion system, along the interior of which slides the impactor (1), the tube or sleeve (10) being provided with two side windows (12) for the passage of the valve retainer (13), being enclosed one of its ends by means of a cover (14) and via the other end it is connected to an extension or main tube (15), which is the support for the firing assembly (41), this main tube (15) being provided with two side windows (19) for the passage of the retaining yoke (20) of the emergency energy absorber (39) and another upper one (22) for the passage of the laser of the velocity measurement system by laser (9); this main tube (15) including in its ends the bearings of the air cushion (25) and fittings (26) supporting the runners of the bearing joining the launcher (11) to the base (27).

3. MACHINE FOR APPLYING LOW VELOCITY IMPACTS TO MECHANICAL STRUCTURES, according to claim 1, **characterised in that** the base structure (27) which supports the impactor (1) and the launcher (11) consists of a basic support piece (28) in the form of a "U" and which bears integral with it the rail (29) of the linear bearing on which the launcher (11) slides via its fittings (26); two symmetric side fittings (30) to which the valve retainer (13), the absorber module (34) of the emergency absorber device (21) and the laser device (9) are fastened.

4. MACHINE FOR APPLYING LOW VELOCITY IMPACTS TO MECHANICAL STRUCTURES, according to claim 1, **characterised in that** the firing assembly or mechanism (41) eliminate the connections between the impactor (1), the launcher (11) and the base (27), permitting movement of the impactor (1) and of the launcher (11) in opposite directions, subjected to the pressure of the drum; including a body (42) fixed to the launcher (11) which incorporates a cylinder-piston for the firing operation; two actuators (43) in an "L" shape with separate lugs (44) for securing-release with respect to the base (27), provided with the respective securing hole (45), these actuators (43) in turn pressing on a respective pivoting lever (24); with the studs (44) being withdrawn at the moment of firing, and the pivoting levers (24) being rotated in order to release the retention on the flange (2).

5. MACHINE FOR APPLYING LOW VELOCITY IMPACTS TO MECHANICAL STRUCTURES, according to claim 1, **characterised in that** the valve-piston (4-5) of the tail end of the impactor (1), assisted by the spring (6) and the pressure in the chamber, force the piston (5) to push against the bar (2) thereof, closing the conical passage (48) shaped between a conical seating in the mouth of the tubular body (47) and a conical widening in the bar itself (2); this conical passage (48) being opened when the body (47) is retained by the valve retainer (13) which passes through the side windows (12) of the tube (10) of the launcher (11), in order to be discharged into the atmosphere via some drill-holes (49) in the wall of the tube (47) of the valve unit (4), the impactor (1) continuing its linear movement against the spring (6) which guarantees that after the impact there is no second impact following the rebound.

6. MACHINE FOR APPLYING LOW VELOCITY IMPACTS TO MECHANICAL STRUCTURES, according to claim 5, **characterised in that** the tubular body (47) of the pneumatic cylinder slides in the bar (2) of the impactor (1) via two anti-friction bushings (50, 51); and the piston (5) possess an O-ring seal (60) fitted in floating mode.

7. MACHINE FOR APPLYING LOW VELOCITY IMPACTS TO MECHANICAL STRUCTURES, according to claim 1, **characterised in that** during the application of the impact the energy supplied in the expansion is distributed between the impactor (1) and the launcher (11) without being transmitted to the base (27), the rebound velocity being measured after the impact and the launcher (11) being detained by means of a residual energy absorber device (39).

8. MACHINE FOR APPLYING LOW VELOCITY IMPACTS TO MECHANICAL STRUCTURES, according to claim 7, **characterised in that** the residual energy absorber device (39) comprises two bodies (38) or sleeves of a pneumatic cylinder mounted one on each side of a central body (54) from where the chamber of each cylinder, being joined to the base structure, is charged to the appropriate pressure; the pistons (18) of each cylinder body (38) being integral with a respective rod (17) whose ends are connected to the cover (14) of the launcher (11) and to the piece (40) integral with the corresponding fitting (26), the linear movements of the launcher (11) continuing in this manner.

9. MACHINE FOR APPLYING LOW VELOCITY IMPACTS TO MECHANICAL STRUCTURES, according to claim 1, **characterised in that** there also exists an emergency energy absorber device (21), if the structure that is going to receive the impact is positioned outside the range of the machine, said device receiving all the kinetic energy of the impactor (1), the flange (7) of the body (2) of the impactor (1) then impinging on a yoke (20) which centrally shapes a conical receiver seating (55), the ends of the yoke (20) being connected to separate collateral absorber blocks (34) linked to the fitting (30) of the base (27).

10. MACHINE FOR APPLYING LOW VELOCITY IMPACTS TO MECHANICAL STRUCTURES, according to claims 1 and 3, **characterised in that** the laser device (9) for measuring the impact velocity measures short distances due to the conical flange (7) including a plane face (56) in its upper surface so that the laser head (9) sees it functioning as a mirror and samples the distance at fixed intervals of time, determining the velocity.

## Patentansprüche

1. Vorrichtung zum Durchführen von Einschlägen mit geringer Geschwindigkeit auf mechanische Strukturen mit einer großen Bandbreite von Energien von innen und außen, bei jedem Einfallwinkel, wobei die angelegte und die absorbierte Energie gemessen wird, und mit einem sehr kurzen Arbeitszyklus, **dadurch gekennzeichnet, dass** die Vorrichtung ein Stoßelement (1), das mit einem Auslöseelement (11) verbunden ist, wobei beide Elemente weiters mit einer Basisstruktur (27) mittels einiger Klinken (24) verbunden sind, und Betätigungsmittel (43) enthält, die vom Steuer- bzw. Regelsystem der Vorrichtung aktiviert werden, wobei das Stoßelement (1) die Form einer zylindrischen Stange (2) mit einem vorderen Ende (3) zum Einschlagen, einem Flansch (7) in ihrem Zentralkörper und einem hinteren Ende aufweist, an dem sich die Ventilanordnung (4) befindet, deren Kolben (5) mit einem rohrförmigen Körper (47) verbunden ist, der im hinteren Abschnitt der Stange (2) des Stoßelements (1) gleitet, und wobei die Hülse (10) des Antriebzylinders der hintere Teil des Auslöserrohrs (11) ist, wobei der Kolben (5) von einem Feder (6) -Absorber zum Absorbieren des Rückstoßes gestützt wird; wobei ein Absorbersystem (39) zur Absorption von Restenergie vorgesehen ist, wobei beide Kammern zweier pneumatischer Zylinder (38) auf einen gewissen Druck geladen sind, wobei das Stoßelement (1) dadurch ausgelöst wird, dass es im Inneren des Auslösers (11) verschoben wird, bis es durch einige Schwenkklinken (24) gehalten wird, wobei der Einschlag durch Wirken auf einen Auslösemechanismus (41) erfolgt.

2. Vorrichtung zum Durchführen von Einschlägen mit geringer Geschwindigkeit auf mechanische Strukturen nach Anspruch 1, **dadurch gekennzeichnet, dass** das Auslöseelement (11) das Rohr oder die Hülse (10) des pneumatischen Zylinders des Antriebsystems enthält, wobei das Stoßelement (1) entlang dessen bzw. deren Inneren gleitet, wobei das Rohr oder die Hülse (10) mit zwei Seitenöffnungen (12) zum Durchlass des Ventilhalters (13) versehen sind, wobei ein Ende des Rohrs oder der Hülse (10) mit einer Abdeckung (14) umgeben ist und es bzw. sie über das andere Ende mit einer Verlängerung oder einem Hauptrohr (15) verbunden ist, die bzw. das den Träger für die Auslöseanordnung (41) darstellt, wobei dieses Hauptrohr (15) mit zwei Seitenöffnungen (19) zum Durchlass des Haltejochs (20) der Not-Energieabsorbereinrichtung (39) und mit einer weiteren oberen Öffnung (22) zum Durchlass des Lasers des Geschwindigkeitsmessystems der Laservorrichtung (9) versehen ist; wobei dieses Hauptrohr (15) an seinen Enden die Lager des Luftkissens (25) und Fittings (26) enthält, die die Laufschienen der Lager tragen, die den Auslöser (11) mit der Basis (27) verbinden.

3. Vorrichtung zum Durchführen von Einschlägen mit geringer Geschwindigkeit auf mechanische Strukturen nach Anspruch 1, **dadurch gekennzeichnet, dass** die Basisstruktur (27), die das Stoßelement (1) und den Auslöser (11) trägt, aus einem Haupttragestück (28) in U-Form, auf dem die Schiene (29) des linearen Lagers, auf dem der Auslöser (11) über die Fittings (26) gleitet, integral gelagert ist, und aus zwei symmetrischen Seiten-Fittings (30) besteht, an denen der Ventilhalter (13), das Absorbermodul (34) der Notabsorbereinrichtung (21) und die Laservorrichtung (9) befestigt sind.

4. Vorrichtung zum Durchführen von Einschlägen mit geringer Geschwindigkeit auf mechanische Strukturen nach Anspruch 1, **dadurch gekennzeichnet, dass** die Auslöseanordnung oder der Auslösemechanismus (41) die Verbindungen zwischen dem Stoßelement (1), dem Auslöser (11) und der Basis (27) aufhebt, wodurch die Bewegung des Stoßelements (1) und des Auslösers (11) unter dem Druck der Trommel in entgegengesetzte Richtungen ermöglicht wird; mit einem Körper (42), der am Auslöser (11) befestigt ist, der einen Zylinderkolben zum Auslösebetrieb aufweist; zwei Betätigungsmittel (43) in L-Form mit getrennten Ansätzen (44) zum Befestigen an der bzw. zum Lösen von der Basis (27), wobei die Basis (27) mit entsprechenden Befestigungslöchern (45) versehen ist, wobei diese Betätigungsmittel (43) auch auf einen entsprechenden Schwenkhebel (24) drücken; wobei die Nasen (44) im Moment des Auslösens zurückgezogen werden, und wobei die Schwenkhebel (24) gedreht werden, um die Halterung am Flansch (7) zu lösen.

5. Vorrichtung zum Durchführen von Einschlägen mit geringer Geschwindigkeit auf mechanische Strukturen nach Anspruch 1, **dadurch gekennzeichnet, dass** der Ventilkolben (4-5) des hinteren Endes des Stoßelements (1), der durch die Feder (6) und den Druck in der Kammer unterstützt wird, den Kolben (5) zum Drücken gegen die Stange (2) zwingt, wodurch der konische Durchgang (48), der zwischen einer konischen Auflagefläche in der Öffnung des rohrförmigen Körpers (47) und einer konischen Verbreiterung in der Stange (2) gebildet ist, geschlossen wird; wobei dieser konische Durchgang (48) geöffnet wird, wenn der Körper (47) vom Ventilhalter (13) gehalten wird, der sich durch die Seitenöffnungen (12) der Rohrs (10) des Auslösers (11) erstreckt, um über einige Bohrlöcher (49) in der Wand des Rohrs (47) der Ventileinheit (4) in die Atmosphäre ausgestoßen zu werden, wobei das Stoßelement (1) seine lineare Bewegung gegen die Feder (6) fortführt, wodurch ein zweiter Einschlag nach dem Rückstoß nach dem Einschlag garantiert verhindert wird.

6. Vorrichtung zum Durchführen von Einschlägen mit geringer Geschwindigkeit auf mechanische Strukturen nach Anspruch 5, **dadurch gekennzeichnet, dass** der rohrförmige Körper (47) des pneumatischen Zylinders über zwei Anti-Reibungs-Lager (50, 51) über die Stange (2) des Stoßelements (1) gleitet; und dass der Kolben (5) einen beweglich angebrachten O-Dichtungsring (60) aufweist.

7. Vorrichtung zum Durchführen von Einschlägen mit geringer Geschwindigkeit auf mechanische Strukturen nach Anspruch 1, **dadurch gekennzeichnet, dass** die während des Durchführens des Einschlags in der Erweiterung zugeführte Energie zwischen dem Stoßelement (1) und dem Auslöser (11) verteilt wird, ohne auf die Basis (27) übertragen zu werden, wobei die Rückstoßgeschwindigkeit nach dem Einschlag gemessen und der Auslöser (11) mittels einer Restenergie-Absorbereinrichtung (39) zurückgehalten wird.

8. Vorrichtung zum Durchführen von Einschlägen mit geringer Geschwindigkeit auf mechanische Strukturen nach Anspruch 7, **dadurch gekennzeichnet, dass** die Restenergie-Absorbereinrichtung (39) zwei Körper (38) oder Hülsen eines pneumatischen Zylinders enthält, die auf jeder Seite eines Zentralkörpers (54) angebracht sind, von wo aus die Kammer jedes Zylinders, die mit der Basisstruktur verbunden ist, auf den geeigneten Druck geladen wird; wobei die Kolben (18) jedes Zylinderkörpers (38) mit einer entsprechenden Stange (17) integral ausgebildet sind, wobei deren Enden mit der Abdeckung (14) des Auslösers (11) und mit dem mit dem entsprechenden Fitting (26) integral ausgebildetem Stück (40) verbunden sind, wobei sich die lineare Bewegung des Auslösers (11) auf diese Weise fortsetzt.

9. Vorrichtung zum Durchführen von Einschlägen mit geringer Geschwindigkeit auf mechanische Strukturen nach Anspruch 1, **dadurch gekennzeichnet, dass** weiters eine Not-Energieabsorbereinrichtung (21) vorgesehen ist, wenn die Struktur, die den Einschlag aufnehmen soll, außerhalb des Bereichs der Vorrichtung positioniert ist, wobei die Einrichtung die gesamte kinetische Energie des Stoßelements (1) aufnimmt, wobei der Flansch (7) des Körpers (2) des Stoßelements (1) dann auf ein Joch (20) auftrifft, das zentral eine konische Aufnahmefläche (55) bildet, wobei die Enden des Jochs (20) mit separaten kollateralen Absorberblöcken (34) verbunden sind, die mit dem Fitting (30) der Basis (27) verbunden sind.

10. Vorrichtung zum Durchführen von Einschlägen mit geringer Geschwindigkeit auf mechanische Strukturen nach Anspruch 1 und 3, **dadurch gekennzeichnet, dass** die Laservorrichtung (9) zum Messen der Einschlaggeschwindigkeit durch den konischen Flansch (7) kurze Distanzen misst, wobei der Flansch (7) an seiner Oberfläche eine ebene Fläche (56) aufweist, die für den Laserkopf (9) als Spiegel dient, wobei die Laservorrichtung (9) die Distanz zu festen Zeitintervallen abtastet, wobei die Geschwindigkeit bestimmt wird.

## Revendications

1. Dispositif pour appliquer des impacts de faible vitesse à des structures mécaniques, dans une large gamme d'énergies à partir de l'intérieur et à partir de l'extérieur, à n'importe quel angle d'incidence, et mesurer l'énergie appliquée et celle absorbée et avec un cycle opératoire très court, **caractérisé en ce qu'**il comprend un élément d'impacteur (1) joint à un élément de lanceur (11) et tous les deux joints à leur tour à une structure de base (27) au moyen de plusieurs cliquets (24) et actionneurs (43) activés par le -système de commande du dispositif, l'impacteur (1) se présentant sous la forme d'une barre cylindrique (2) avec une extrémité avant (3) pour l'impact, une bride (7) dans son corps central et une extrémité arrière dans laquelle l'ensemble de soupape (4) doit se trouver, ensemble dont le piston (5) est joint à un corps tubulaire (47) qui coulisse dans la section arrière de la barre (2) de l'impacteur (1), et dont le manchon (10) du cylindre de propulsion constitue la partie arrière du tube de lanceur (11), le piston (5) étant aidé par un ressort (6) qui absorbe le rebond; comprenant un système d'absorbeur d'énergie résiduelle (39) dans lequel les deux chambres de deux cylindres pneumatique (38) sont chargées à une certaine pression, l'impacteur (1) étant amorcé en étant déplacé à l'intérieur du lanceur (11) jusqu'à ce qu'il soit retenu par plusieurs cliquets pivotants (24), l'impact étant réalisé en-actiorinant un mécanisme de tir (41).

2. Dispositif pour appliquer des impacts de faible vitesse à des structures mécaniques selon la revendication 1, **caractérisé en ce que** l'élément de lanceur (11) comprend le tube ou le manchon (10) du cylindre pneumatique du système de propulsion, le long de l'intérieur duquel l'impacteur (1) coulisse, le tube ou le manchon (10) comportant deux fenêtres latérales (12) pour le passage du dispositif de retenue de soupape (13), et étant fermé à une de ses extrémités au moyen d'un couvercle (14) et étant connecté par l'intermédiaire de son autre extrémité à un tube principal ou d'extension (15), qui sert de support à l'ensemble de tir (41), ce tube principal (15) comportant deux fenêtres latérales (19) pour le passage de l'étrier de retenue (20) de l'absorbeur d'énergie de secours (39), et une autre fenêtre supérieure (22) prévue pour le passage du laser du système de mesure de la vitesse par laser (9); ce tube principal (15) contenant dans ses extrémités les paliers du coussin d'air (25) et les raccords (26) qui supportent les rails du palier joignant le lanceur (11) à la base (27).

3. Dispositif pour appliquer des impacts de faible vitesse à des structures mécaniques selon la revendication 1, **caractérisé en ce que** la structure de base (27) qui supporte l'impacteur (1) et le lanceur ((11) est constituée d'une pièce de support de base (28) en forme de "U" qui porte de façon intégrée à celle-ci le rail (29) du palier linéaire sur lequel le lanceur (11) coulisse par l'intermédiaire de ses raccords (26); deux raccords latéraux symétriques (30) auxquels le dispositif de retenue de soupape (13), le module d'absorbeur (34) du dispositif d'absorbeur de secours (21) et le dispositif de laser (9) sont attachés.

4. Dispositif pour appliquer des impacts de faible vitesse à des structures mécaniques selon la revendication 1, **caractérisé en ce que** l'ensemble ou le mécanisme de tir (41) élimine les connexions entre l'impacteur (1), le lanceur (11) et la base (27), permettant le déplacement de l'impacteur (1) et du lanceur (11) dans des directions opposées, soumis à la pression du tambour; comprenant un corps (42) fixé au lanceur (11) qui incorpore un ensemble cylindre - piston pour l'opération de tir; deux actionneurs (43) en forme de "L" présentant des saillies séparées (44) pour la fixation - la séparation par rapport à la base (27), comportant le trou de fixation respectif (45), ces actionneurs (43) étant à leur tour pressés sur un levier pivotant respectif (24); avec les goujons (44) qui sont retirés au moment du tir, et les leviers pivotants (24) qui sont tournés dans le but de libérer la retenue exercée sur la bride (2).

5. Dispositif pour appliquer des impacts de faible vitesse à des structures mécaniques selon la revendication 1, **caractérisé en ce que** l'ensemble soupape - piston (4-5) de l'extrémité arrière de l'impacteur (1), assisté par le ressort (6) et la pression dans la chambre, force le piston (5) à exercer une poussée contre la barre (2) de celui-ci, fermant le passage conique (48) qui est formé entre un appui conique dans le goulot du corps tubulaire (47) et un élargissement conique dans la barre (2) elle-même; ce passage conique (48) étant ouvert lorsque le corps (47) est retenu par le dispositif de retenue de soupape (13) qui passe à travers les fenêtres latérales (12) du tube (10) du lanceur (11), dans le but d'être déchargé dans l'atmosphère par l'intermédiaire de plusieurs trous de forage (49) dans la paroi du tube (47) de l'unité de soupape (4), l'impacteur (1) continuant son déplacement linéaire contre le ressort (6) qui garantit qu'après l'impact, il n'y aura pas de second impact qui suivra le rebond.

6. Dispositif pour appliquer des impacts de faible vitesse à des structures mécaniques selon la revendication 5, **caractérisé en ce que** le corps tubulaire (97) du cylindre pneumatique coulisse dans la barre (2) de l'impacteur (1) par l'intermédiaire de deux rondelles anti-friction (50, 51); et le piston (5) possède un joint torique (60) agencé en mode flottant.

7. Dispositif pour appliquer des impacts de faible vitesse à des structures mécaniques selon la revendication 1; **caractérisé en ce que**, pendant l'application de l'impact, l'énergie fournie lors de la dilatation est distribuée entre l'impacteur (1) et le lanceur (11) sans être transmise à la base (27), la vitesse du rebond étant mesurée après l'impact et le laceur (11) étant retenu au moyen d'un dispositif d'absorbeur d'énergie résiduelle (9) .

8. Dispositif pour appliquer des impacts de faible vitesse à des structures mécaniques selon la revendication 7, **caractérisé en ce que** le dispositif d'absorbeur d'énergie résiduelle (39) comprend deux corps (38) ou manchons d'un cylindre pneumatique monté un sur chaque côté d'un corps central (54) à partir duquel la chambre de chaque cylindre, qui est jointe à la structure de base, est chargée à la pression appropriée; les pistons (18) de chaque corps de cylindre (38) étant intégrés à une tige respective (17) dont les extrémités sont connectées au couvercle (14) du lanceur (11) et à la pièce (40) intégrée au raccord correspondant (26), les déplacements linéaires du lanceur (11) se poursuivant de cette manière.

9. Dispositif pour appliquer des impacts de faible vitesse à des structures mécaniques selon la revendication 1, **caractérisé en ce qu'**il existe également un dispositif d'absorbeur d'énergie de secours (21), si la structure qui est sur le point de recevoir l'impact est positionnée à l'extérieur de la portée du dispositif, ledit dispositif recevant la totalité de l'énergie cinétique de l'impacteur (1), la bride (7) du corps (2) de l'impacteur (1) frappant ensuite un étrier (20) qui forme de façon centrale un appui de récepteur conique (55), les extrémités de l'étrier (20) étant connectées à des blocs d'absorbeur collatéraux séparés (34) reliés au raccord (30) de la base (27).

10. Dispositif pour appliquer des impacts de faible vitesse à des structures mécaniques selon les revendications 1 et 3, **caractérisé en ce que** le dispositif de laser (9) pour mesurer la vitesse de l'impact mesure des distances courtes à cause de la bride conique (7) qui présente une face plane (56) dans sa surface supérieure, de telle sorte que la tête de laser (9) voie celle-ci agir comme un miroir et échantillonne la distance à des intervalles de temps fixes, déterminant ainsi la vitesse.
